**Europäisches Patentamt**

**European Patent Office**

**Office européen des brevets**

(19)

(11) Publication number: **0 046 650**
**A2**

(12) # EUROPEAN PATENT APPLICATION

(21) Application number: **81303725.6**

(22) Date of filing: **14.08.81**

(51) Int. Cl.³: **C 08 L 27/00**

(30) Priority: **27.08.80 US 181564**
**01.04.81 US 250957**

(43) Date of publication of application:
**03.03.82 Bulletin 82/9**

(84) Designated Contracting States:
**BE DE FR GB IT NL**

(71) Applicant: **HOOKER CHEMICALS & PLASTICS CORP.**
**P.O.Box 189 345, Third Street**
**Niagara Falls New York 14302(US)**

(72) Inventor: **Gibby, William H.**
**611 Old Country Road Dix Hills**
**New York 11745(US)**

(74) Representative: **Myerscough, Philip Boyd et al,**
**J.A.Kemp & Co. 14, South Square Gray's Inn**
**London, WC1R 5EU(GB)**

(54) **Blends of vinyl halide-polyolefin graft copolymers and ABS polymers.**

(57) Moldable thermoplastic polymer composition having improved low temperature impact resistance comprise a blend of a graft copolymer of a vinyl halide and optionally a comonomer copolymerisable therewith on a polyolefin component and a polymer composition consisting essentially of acrylonitrile, 1,3-butadiene and styrene monomer units (ABS polymer).

These compositions have improved flowability, in the molten state and, when molded under conventional temperature and pressure conditions, provide shaped articles having improved low temperature impact resistance, tensile strength, flame retardancy and heat distortion temperature characteristics, and a desirable gloss or sheen finish.

EP 0 046 650 A2

TITLE: <u>BLENDS OF VINYL HALIDE-POLYOLEFIN GRAFT COPOLYMERS</u>
<u>AND ABS POLYMERS</u>

The present invention relates to thermoplastic polymer blends capable of being molded into articles having improved impact strength especially at lower temperatures, desirable high heat distortion temperatures, better flow, improved flame retardant properties, increased surface gloss and lower specific gravity as compared to previously known blends of conventional vinyl halide polymers and ABS polymers. The polyblends of the present invention contain a graft copolymer of a vinyl halide, or of a vinyl halide and a comonomer copolymerizable therewith on a polyolefin component. Such copolymers are hereinafter referred to as "vinyl halide polyolefin graft copolymers". The present blends also contain a polymer composition consisting essentially of acrylonitrile, 1,3-butadiene and styrene monomer units, such compositions are hereinafter referred to as "ABS polymer".

Polyvinyl halide, especially polyvinyl chloride, polymers are widely used thermoplastic materials having many favorable technological properties. Such conventional non-graft vinyl halide polymers do not have heat distortion temperatures which are sufficiently high to adapt such polymers to much more wide use. Moreover, such polymers, especially rigid polyvinyl halide polymers, do not have a high impact resistance at ambient or subambient temperatures. Thus, at ambient temperature, i.e., at about 20°C., corresponding to about 68°F., the notched Izod impact resistance of vinyl halide homo- and copolymers is only of the order of about 0.4 to less than about 1 ft-lb/in. At subambient temperatures, e.g. down to -20°F. or lower, the notched Izod impact resistance of these polymers becomes vanishingly small or negligible.

It has been previously proposed to add minor amounts of an appropriate polymer additive, or additives, to improve ambient impact resistance of conventional polyvinyl polymer compositions. Usually, such additives are useful in ranges from about 3 to about 15 percent by weight of the polyvinyl halide polymer. Among the materials which have been found acceptable as polyvinyl halide impact modifiers are ABS polymers. Such impact modifiers moderately enhance the ambient temperature impact resistance of conventional vinyl halide polymers, i.e. generally raise the ambient temperature notched Izod impact resistance of the polymer to about 2 to 10 ft-lbs/in. However, these impact modifiers are relatively ineffective in imparting a satisfactory subambient temperature impact resistance to the polymer, i.e. the -20°F. notched Izod impact resistance of the polymer containing the impact modifier is well below 1 ft-lb/in and usually is about 0.4 to 0.5 ft-lb/in.

Recently, vinyl halide-polyolefin graft copolymers have been developed. Such copolymers are produced by polymerization of vinyl halide (or a monomer mixture of vinyl halide and copolymerizable ethylenically unsaturated comonomers) in the presence of a polyolefin elastomer. Such reaction yields a polymer product which contains vinyl halide polymer chains bound, i.e. grafted at various sites along the chain of the trunk olefin polymer as well as ungrafted vinyl halide polymer and ungrafted polyolefin. The graft polymer product, especially the graft polymer product prepared by a liquid phase bulk polymerization reaction, has improved impact resistance at both ambient temperature and subambient temperatures compared to the aforementioned conventional, i.e. ungrafted, vinyl halide polymers even when the latter are blended with a conventional polyvinyl halide impact modifying polymer additive. The bulk polymerization-prepared graft polymer product is even distinguished from the corresponding graft polymer prepared by a non-bulk polymerization technique, e.g. suspension polymerization, by an enhanced impact resistance at both low and ambient temperature and by breakage by the desirable ductile breakage mode rather than by an undesirable brittle breakage mode.

Although such graft polymer possesses a subambient low temperature impact resistance substantially greater than that of conventional impact modifier-containing vinyl halide polymer compositions, the improvement, especially at low temperature, in impact resistance is not sufficient enough to make such copolymers generally useful in a wide variety of applications at low temperature.

It has now been found that blends containing a polyvinyl halide polyolefin graft polymer, especially those produced by a liquid phase bulk polymerization reaction, and ABS polymer have increased flowability and yield a molded product having improved impact resistance (especially improved low temperature impact resistance both initially and after aging), improved high heat distortion temperature characteristics, a desirable surface sheen, improved tensile strength and good flame retardancy.

## SUMMARY OF THE INVENTION

The present invention relates to a moldable thermoplastic polymer composition which is comprised of a blend of polyvinyl halide-polyolefin graft copolymer and an ABS polymer. By polyvinyl halide-polyolefin graft polymer is meant the product of the graft polymerization of vinyl halide in the presence of an olefin trunk polymer reactant as further described below.

The invention includes compositions comprising blends of a major proportion of the graft polymer and a minor proportion of the ABS polymer as well as blends of a major proportion of the ABS polymer and a minor proportion of the graft polymer composition. In this regard, major proportion signifies that a constituent of the blend is present in a proportion of about 50 weight percent or more based on the weight of the blend. Minor proportion signifies that a constituent of the blend is present in a proportion of less than about 50 weight percent based on the weight of the blend.

- 4 -

Compositions of the invention comprising a blend of a major proportion of the graft polymer and a minor proportion of the ABS polymer constituent (typically containing from less than about 1 to less than about 50 weight percent of the ABS polymer based on the weight of the blend) have improved flowability in the molten state and when molded under conventional temperature and pressure conditions, produce a molded product having improved tensile strength, impact resistance and heat distortion temperature. The product has a gloss or sheen finish.

Compositions of the invention comprising a blend of a minor proportion of the graft polymer and a major proportion of the ABS polymer (typically containing from about 50% to more than about 99% by weight of the ABS polymer based on the weight of the blend) are especially characterized by improved hardness, and good flame retardancy as well as by improved higher heat distortion temperature, impact resistance and tensile strength.

### DETAILED DESCRIPTION OF THE INVENTION AND THE PREFERRED EMBODIMENTS THEREOF

While proportions of the ABS polymer in the present blend may range typically from less than about 1% to more than about 99 weight percent of ABS polymer (with the balance being the graft polymer component), it is preferred to provide blends which contain from about 1% up to about 95% of ABS polymer to achieve the above-mentioned enhanced properties.

Blends of the invention containing a minor proportion of the ABS polymer especially contain from about 60% to about 95% of the graft polymer component and from about 5% to about 40% of the ABS polymer component, said percentages being based on the weight of the blend of the graft polymer and the ABS polymer.

Similarly, blends of the invention containing a major proportion of the ABS polymer especially contain about 50% to about 80% of the ABS polymer and about 20% to less than about 50% of the graft polymer component, said percentages being based on the weight of the blend.

## THE POLYVINYL HALIDE-POLYOLEFIN GRAFT COPOLYMER COMPONENT

The polyvinyl halide copolymer component is a graft copolymer of a vinyl halide (or of a vinyl halide and a comonomer copolymerizable therewith) and a polyolefin elastomer. The graft polyvinyl halide component may suitably be obtained by polymerizing a mixture of vinyl halide monomer with one or more ethylenically unsaturated comonomers (or more conveniently, a vinyl halide monomer alone) in the presence of an olefin trunk polymer reactant.

Suitable ethylenically unsaturated comonomer materials which can be used include: ethylene, propylene, butene-1, 4,4-dimethyl-butene-1, decene-1, styrene and its nuclear alpha-alkyl or aryl substituted derivatives, e.g. o-, m- or p-methyl, ethyl or butyl styrene; and halogenated styrenes, such as alpha-chloro-styrene; mono-olefinically unsaturated esters including vinyl esters, e.g. vinyl acetate, vinyl stearate, vinyl benzoate, vinyl-p-chloroben-zoates, alkyl methacrylates, e.g. methyl, ethyl, propyl and stearyl methacrylates, alkyl crotonates, e.g. octyl crotonate; alkyl acrylates, e.g. methyl 2-ethyl hexyl, stearyl acrylates; hydroxyether and tertiary butylamino acrylates, e.g. 2-ethoxy ethyl acrylate, isopropenyl esters, e.g. isopropenyl acetate; isopropenyl halides, e.g. isopropenyl chloride; vinyl esters of halogenated acids, e.g. vinyl alpha-chloro-acetate, and vinyl alpha-bromo-propionate; allyl and methallyl esters, e.g. allyl chloride, allyl cyanide; allyl chlorocarbonate, allyl nitrate, allyl formate and allyl acetate and the corresponding methallyl compounds; esters of alkenyl alcohols, e.g. beta-ethyl allyl alcohol; haloalkyl acrylates, e.g. methyl and ethyl alpha-chloroacrylates; alkyl alpha-cyanoacrylates, e.g. methyl alpha-cyanoacrylate; itaconates, e.g. mono-methyl itaconate, diethyl itaconate, alcohol (C-3 to C-8) itaconates; maleates, e.g. monomethyl maleate, diethyl maleate, alcohol (C3 to C8) maleates; and fumarates, e.g. monomethyl fumarate, diethyl fumarate, alcohol (C3 to C8) fumarates, and diethyl glutaconate; mono-olefinically unsaturated organic nitriles including for example, fumaronitrile, acrylonitrile, methacrylonitrile, 1,1-di-dyanopropene-1, and oleo-nitrile; mono-olefinically unsaturated carboxylic acids including, for example, acrylic acid, methacrylic acid, cinnamic acid, maleic, and itaconic acids, maleic anhydride and the like. Amides of these acids, such as acrylamide, are also useful. Vinyl alkyl ethers and vinyl ethers, e.g. vinyl methyl ether, vinyl ethyl ether, vinyl 2-chloroethyl ether, vinyl cetyl ether and the like; and vinyl sulfides, e.g. vinyl beta-chloroethyl sulfide, vinyl beta-ethoxy-ethyl sulfide and the like can be also included as can di-olefinically unsaturated hydrocarbons containing two olefinic groups in conjugated relation and the halogen derivatives thereof, e.g. butadiene-1,3; 2-methyl-butadiene-1,3; 2,3-dichloro-butadiene-1,3; and 2-bromobutadiene-1,3; and the like.

The polyolefin component may be a homopolymer, bipolymer, terpolymer, tetrapolymer or higher copolymer of olefinic monomers. The olefin polymers can also contain the residue of a polyene, e.g. a non-conjugated diene as a monomer unit. Preferably, the polyolefin is an elastomer.

Olefin homopolymers may be obtained by the polymerization of a suitable monomer, such as ethene, propene, i.e. propylene, butene-1, isobutene, octene or 5-methylhexene-1.

Suitable comonomers for use in preparing the polyolefins of those utilized to prepare the olefin homopolymers as listed above, e.g. propene or butene-1 with ethene and the like. Suitable ter-monomers are those utilized to prepare homopolymers and copolymers as disclosed above, such as propene, ethene and the like, as well as a polyene. Especially suitable polyene-derived ter- and higher copolymers can be prepared from olefin monomer mixtures containing up to 15 percent, preferably up to about 6 percent by weight, of the polyene (preferably non-conjugated), e.g. dicyclopentadiene, cyclo-octadiene and other dienes with linear or cyclic chains. The polyolefin used may also be a halogenated polyolefin, e.g. a chlorinated, brominated or fluorinated polyolefin.

Preferably, however, the polyolefin is a hydrocarbon polyolefin, i.e. a polyolefin containing only carbon and hydrogen atoms.

The polyolefins used are characterized by being soluble, partially soluble or dispersible at ambient temperatures and pressure in the vinyl chloride graft copolymer component, and in having, typically, monomeric units of 2 to 8 carbon atoms. The weight average molecular weight of the olefin polymers, copolymers, terpolymers and tetrapolymers can vary from about 50,000 to about 1,000,000 and higher. Preferred as polyolefin elastomers for use in preparing vinyl halide graft polymers for use in the invention are ethene propene polyolefin elastomers and ethene-propene-diene polyolefin elastomers.

More particularly, the hydrocarbon olefin polymers which are suitable employed as trunk polymer reactant in the preparation of the present graft polymers is an elastomer having a weight average molecular weight of about 50,000 to 1,000,000, preferably of about 50,000 to 300,000 which is soluble, partially soluble or dispersible in the liquid phase polymerization reaction mixture. The trunk polyolefin reactant is suitable selected from the group consisting of:

(a) a homopolymer of an aliphatic hydrocarbon olefin monomer of 2 to 8 carbon atoms;

(b) a copolymer of 2 or more of said olefin monomers; and

(c) a polymer of at least one of said olefin monomers and no more than 15 percent, based on the weight of the polymer, of a non-conjugated aliphatic hydrocarbon polyene of 4 to 18 carbon atoms wherein all of the carbon-to-carbon double bonds do not form a conjugated system.

Typically, the aliphatic hydrocarbon olefin monomer of the trunk polyolefin is ethene (i.e. ethylene), propene, butene-1, isobutene, octene or 5-methylhexene-1. Typically, the hydrocarbon polyene employed as an optional component of the trunk polyolefin is a linear of cyclic polyene, such as 1,4-hexadiene dicyclopentadiene, ethylidene norbornene and the mono- and di- Diels Alder adducts of cyclopentadiene. The polyene which is present in the polyene-modified trunk polymer is preferably a diene, and the proportion of the polyene in the trunk polymer is preferably no more than about 6 percent. The trunk polymer employed in preparing the graft polymer components of the present compositions is preferably a copolymer of two or more of the above-defined aliphatic hydrocarbon olefins (typified by ethylene-propylene copolymer elastomer) or a polymer of at least one of said hydrocarbon olefin monomers and the polyene. An especially good graft polymer is obtained by employing as trunk polyolefin a terpolymer, i.e. ternary copolymer, of two different olefin monomers and a diene, for example, an ethylene-propylene-ethylidene norbornene elastomer.

The vinyl halide-graft copolymers of the polyolefin elastomers are prepared by polymerizing the vinyl halide in the presence of about 0.05 to about 20 percent, preferably about 1 to about 20 percent, based on the weight of vinyl halide monomer of the above-described polyolefin elastomer. Preparation of such vinyl halide-polyolefin graft copolymer according to emulsion and suspension polymerization techniques is described in G. Natta et al., US Patent 3,812,204, the disclosure of which is incorporated herein by reference. Preparation of such vinyl halide-polyolefin graft copolymer by vapor phase and solution polymerization techniques are described, respectively, in J. Dumoulin et al., US Patent 3,789,083 and F. M. Rugg et al., US Patent 2,947,719, the disclosure of which is incorporated herein by reference. Desirably, the preparation of the vinyl halide-polyolefin graft copolymers useful as the polyvinyl halide component of the composition of the invention is effected by a bulk liquid phase polymerization technique as described by A. Takahashi, US Patent 4,071,582, US application SN 746,046, filed November 30, 1976, now US Patent 4,163,033, and by L. E. Walker, US Patents 4,007,235 and 4,067,928, the disclosure of which Takahashi and Walker patents is also incorporated herein by reference.

The vinyl halide-polyolefin graft copolymer, especially the graft copolymer product prepared by a liquid phase bulk polymerization reaction, has a substantially enhanced impact resistance at both ambient and sub-ambient temperatures, compared to the conventional, i.e. ungrafted, vinyl halide polymers, even when the latter are blended with a conventional polyvinyl halide impact modifying polymer additive. The bulk polymerization-prepared graft polymer product is even distinguished from the corresponding graft polymer prepared by a non-bulk polymerization technique, e.g. suspension polymerization, by an enhanced impact resistance at both low and ambient temperature and by breakage by the desirable ductile breakage mode rather than by an undesirable brittle breakage mold.

### THE ACRYLONITRILE-1, 3-BUTADIENE-STYRENE POLYMER (ABS POLYMER) COMPONENT

The acrylonitrile-1, 3-butadiene-styrene polymers employed as components of the compositions of the invention constitute a readily available class of polymers (generally proprietary polymers)

- 10 -

which are widely employed as impact modifier for polyvinyl halide resins. If desired, they are available at about the same refractive index as vinyl halide resins. As recognized by the art, the ABS polymers are polymers of acrylonitrile, butadiene and a styrene component comprised of styrene, itself, or derivatives such as alpha- and beta-methyl styrene or mixtures thereof. The ABS polymers comprise either (1) a mixture of a copolymer of styrene and acrylonitrile (typically at a monomer ratio of 60 to 80:40 to 20 styrene: acrylonitrile) with a minor amount (e.g. 10 to 40 percent by weight of a copolymer of acrylonitrile and butadiene (typically at a monomer ratio of 5 to 40:95 to 60) or (2) a mixture of a copolymer of the styrene component and acrylonitrile (typically at a monomer ratio of 60 to 80:40 to 20) with a minor amount (typically 10 to 40 percent) of a graft of the latter styrene component-acrylonitrile copolymer onto polybutadiene. Particularly useful in the present blends are ABS polymers which are comprised or or include alpha- or beta-methyl styrene as the styrene component.

The ABS polymers are more particularly described in R. E. Gallagher, US Patent 3,988,393 and W. C. Calbert, Australian Patent 220,155 (issued April 11, 1957), the disclosures of which are incorporated herein by reference.

### OPTIONAL ADDITIVES

The compositions of the invention may also contain various functional additives, which additives are conventional in the preparation of vinyl halide polymer molding compositions. Typically, these additives include thermal and/or light stabilizers, as well as external and internal lubricants and processing aids for the graft vinyl halide resin component.

Stabilizers suitable for use in making the vinyl halide graft polymer compositions of the invention include materials known to stabilize polyvinyl halide against the degradation action of heat and/or light. They include known stabilizers, both organic and inorganic, such as metal salts of mineral acids, salts of organic carboxylic acids, e.g. carboxylic acids of 6 to 18 carbon atoms, organo-tin compounds, epoxides, amine compounds and organic phosphites. Conveniently, an organo-tin compound, such as a methyl tin mercaptide, is employed as a stabilizer.

A more detailed description of suitable stabilizers, lubricants and processing aids for incorporation into the compositions of the invention is presented in British Published Application No. 2015007 A, published 5 September 1979, and in Belgian Patent 855,764 issued December 16, 1977, the disclosures of which are incorporated herein by reference.

Additional classes of additives known for use in polyvinyl halide resins which can be added optionally to the compositions of the invention in addition to the aforementioned stabilizers, lubricants and processing aids include pigments, dyes and fillers as described in L. R. Becker, Plastics Engineering, March 1976, "Additives 76", pages 3-4, the disclosure of which is incorporated herein by reference.

In general, the amount of each type of the aforementioned optional additive employed in the present composition is about 0.01 to about 5 weight percent, preferably about 0.1 to about 3 weight percent, based on the total resin composition.

The compositions of the invention are essentially of the rigid vinyl halide resin type which contain no more than about 10 weight percent of a plasticizer for vinyl halide grade polymer and preferably are free of said plasticizing additive. Typical suitable plasticizer additives (which are generally organic compounds) conventionally employed in polyvinyl halide compositions include, for example, the esters of aliphatic alcohols of medium chain length, e.g. of 7 to 11 carbon atoms, with phenyl dicarboxylic acids, e.g. di-n-octyl phthalate and di-iso-nonyl phthalate as well as organic phosphate esters, such as cresyl-diphenyl-phosphate and octyl diphenyl-phosphate. The chemical structure and technology of plasticizers conventionally employed in polyvinyl halide compositions is more particularly discussed in L. R. Brecker, op. cit. page 5, the disclosure of which is incorporated herein by reference.

The compositions of the invention can be prepared by milling and molding techniques conventional for preparing conventional impact-modified vinyl halide polymer polyblends, e.g. conventional ABS polymer modified polyvinyl halide. Generally, the component polymers (and, if desired, the above-described optional additives) are added as a particulate solid mixture to a roll mill or a Banbury type mixer and milled at an elevated temperature conventional for processing rigid vinyl halide polymer compositions. The resultant polymer blend obtained as a product from the milling and mixing operation is molded by either an injection or compression molding technique or extruded to produce articles of particular desired shapes at elevated temperature and pressure conditions which are conventional in molding rigid polyvinyl halide compositions. Desirably, an injection molding technique is employed to prepare the aforementioned articles which can be in various shapes including bars, plates, rings, rods, as well as sheets and films.

The following examples further illustrate the various aspects of the invention but are not intended to limit it. Various modifications can be made in the invention without departing from the spirit and scope thereof. Where not otherwise specified in this specification and claims, temperatures are given in degrees centigrade and all parts and percentages are by weight.

- 13 -

## EXAMPLES I-III

A particulate solid polymer blend was produced by mixing 90 parts of a vinyl chloride-polyolefin graft copolymer wherein the polyolefin is an ethylene-propylene-ethylidene norbornene terpolymer and which has been prepared by bulk free radical liquid phase polymerization substantially as described in aforementioned US Patent 4,163,033 (employing 5 parts of the polyolefin per 100 parts of the vinyl chloride monomer) with 10 parts of an ABS polymer according to the following procedure.

In a heated Prodex Henschel mixer operating at about 3,800 rpm, a mixture of the aforementioned graft copolymer and 1.8 parts per 100 parts of the graft copolymer of Themolite T-31, a proprietary butyl tin mercaptile stabilizer manufactured by M & T Chemicals, Inc. was agitated in molten condition for 2 minutes at 110°-120°F.

To a portion of the resultant mixture containing 90 parts of the graft copolymer, there was added two parts of K-120 ND, a proprietary copolymer of ethyl acrylate (13%) and methyl methacrylate (87%) which is conventionally employed as a processing aid for vinyl halide polymers and which is marketed by Rohm and Haas Co.; 1.50 parts of glyceryl monostearate and 0.25 part of calcium stearate. The resultant mixture was milled for an additional six minutes at 240°F. and allowed to cool to ambient temperature. To a portion of this mixture containing 90 parts of the graft copolymer was added 10 parts of an ABS polymer. The ABS polymer component was a proprietary product marketed by the Marbon Division of Borg Warner Corporation under the designation Cyclolac T-1001.

The mixture containing the ABS polymer component was milled at about 120°-130°F. and was then pelletized into face cute pellets of about 1/8 inch diameter employing a Baker Perkins Ko Kneader Pelletizer.

- 14 -

The pelletized blend was cooled in air to ambient temperature and added to the rolls of a Farrell Mill operating under the following conditions:

| | |
|---|---|
| Front Roll Temperature | 380°F. |
| Back Roll Temperature | 360°F. |
| Roll Speed | 45-46 ft./min. |

After fusion, the mixture remained on the mill rolls for about 5 minutes with the appearance of the bands of the mixture on the rolls being satisfactory. This mixture was delivered from the mill as a sheet which was folded at 380°F. into a 5-inch x 5-inch x 1/4-inch mold. The blend was then compressed in a Carver Press operating at 360°F. platen temperature and 3,000 psi pressure to mold sample plaques. The plaques were cooled to ambient temperature and were cut into several sample bars about 5 inches in length, 1/2 inch in width and about 1/4 inch in thickness.

These bar samples were tested to determine the Heat Distortion Temperature (HDT) at 264 psi in accord with ASTM Test D648. The HDT was found to be 66°.

Samples of the blend were also molded at blend temperatures of about 400°F. by a comparable injection molding technique to prepare bar samples for testing of the notched Izod Impact resistance in accord with ASTM Test D256 at ambient temperature. The notched Izod Impact resistance was found to be 15.3 ft-lb/in.

This procedure was repeated in Example II in preparing and testing a sample of a blend of 80 parts of the graft copolymer of Example I and 20 parts of the ABS polymer of Example I and in control Example III in preparing and testing a sample of the pure graft copolymer of Example I. The results of these Examples are compared in Table I below.

## TABLE I

| EXAMPLE NO. | PARTS COPOLYMER | PARTS ABS | HEAT DISTORTION TEMPERATURE °C. | IZOD IMPACT STRENGTH<br>ft.lb./in. at ambient temperature |
|---|---|---|---|---|
| I | 90 | 10 | 66 | 15.3 |
| II | 80 | 20 | 68.5 | 12.5 |
| III | 100 | -- | 64 | 18.1 |

### EXAMPLES IV-VI

By a milling and molding mixing procedure substantially similar to that of Examples I-III above, except that the butyl tin mercaptile stabilizer was omitted, 75 parts of graft copolymer component was blended with 25 parts of an ABS polymer composition marketed by the Marbon Division of Borg Warner Corporation under the designation Marbon Blendex 702 wherein the styrene monomer component is alpha-methyl styrene. The graft copolymer component is that of Example I except that about 6 parts of the polyolefin per 100 parts of vinyl chloride monomer are employed in its preparation. The mixture was blended and formed into bars as in Example I.

A bar sample was notched and tested for Notched Izod Impact Resistance substantially in accord with ASTM Test D256 at ambient temperature. The as-molded ambient impact resistance was found to be 22.0 ft-lb/in. A bar sample was annealed at 60° for a period of 24 hours and the impact resistance was tested as beflore. The annealed impact resistance was found to be 19.6 ft-lb/in.

A bar sample was tested to determine the HDT following the procedure of ASTM Test D648. The as-molded HDT at 264 psi was found to be 66°C. After annealing at 60° for 24 hours the HDT was found to be 79°.

- 16 -

A bar sample was tested to determine the tensile strength following the procedure of ASTM Test D638. The as-molded tensile strength was found to be 6,300 psi. After annealing at 60° for 24 hours, the tensile strength was found to be 6,800 psi.

Example IV is shown as Example IV in Table II below. Examples V and VI were conducted in the manner of Example IV, except the ABS polymer in Example V was a product marketed by the Marbon Division or Borg Warner Corporation under the designation Marbon Cyclolac X-37, wherein the styrene monomer component is alpha-methyl styrene and Example VI is a control in which no ABS polymer was included.

TABLE II

| EXAMPLE | PARTS COPOLYMER | PARTS ABS | IZOD IMPACT STRENGTH ft. lb./in. | | 264 psi HDT $^\circ$C | | TENSILE STRENGTH psi | |
|---|---|---|---|---|---|---|---|---|
| | | | As molded | Annealed | As molded | Annealed | As molded | Annealed |
| IV | 75 | 25 | 22.0 | 19.6 | 66 | 79 | 6300 | 6800 |
| V | 75 | 25 | 21.0 | 19.3 | 64 | 80 | 6100 | 6700 |
| VI | 100 | -- | 19.6 | 16.2 | 60 | 74 | 6000 | 6700 |

0046650

- 18 -

EXAMPLE VII

A particulate solid polymer blend was produced by mixing 100 parts of an ABS polymer with 100 parts of a vinyl chloride polyolefin graft copolymer wherein the polyolefin is an ethylene-propylene-ethylidene norbornene terpolymer and which has been prepared by bulk free radical liquid phase polymerization substantially as described in aforementioned US Patent 4,163,033, employing 6 parts of the polyolefin polymer per 100 parts of the vinyl chloride monomer. The ABS polymer component was a proprietary product manufactured by The Marbon Division of Borg Warner Corporation, designated Marbon Blendex 702. Marbon Blendex 702 contains polymers of alpha-methyl styrene, acrylonitrile and butadiene.

The mixture was added to the rolls of a Farrell Mill operating under the following conditions:

|  |  |
|---|---|
| Front Roll Temperature | 380°F. |
| Back Roll Temperature | 360°F. |
| Roll Speed | 48 ft./min. |

After fusion, the mixture remains on the mill rolls for about 5 minutes with the appearance of the blends of the mixture on the rolls being satisfactory. The mixture is delivered from the mill as a sheet which is allowed to cool to about ambient temperature (about 20°). The sheet was then ground into pellets about 8-9 mm. in size.

The resultant particulate polyblend was then injection molded at a temperature of 187° (370°F) into bars about 5 inches in length, 1/2 inch in width and about 1/8 inch in thickness.

A bar sample was then notched and tested for Notched Izod Impact resistance at ambient temperature and -20°F. substantially in accord with ASTM Test D256. The results were found to be 14.0 ft-lb/in at room temperature and 1.6 ft-lb/in at -29°(-20°F). A bar sample was tested to determine the heat distortion temperature (HDT) at 264 psi substantially in accord with ASTM Test D648. The HDT was found to be 72°C. A second sample was annealed at 60°C for a period of 24 hours and then tested to determine the HDT in a similar manner. The HDT for the annealed sample was found to be 83°C. A bar sample was tested to determine tensile strength of the sample was found to be 6,800 psi and the tensile modulus was found to be $3.56 \times 10^5$ psi. The flexural strength determined in accord with ASTM Test D790 was found to be 13,000 psi and the flexural modulus was found to be $3.86 \times 10^5$ psi.

This example is shown in tabular form in Table III as Example VII. Examples VIII to XIII shown in the Table were carried out in a similar manner, with the following exceptions.

In Examples VIII, XI and XIII the ABS polymer was Marbon Cylolac X-37 which contains polymers of alpha-methyl styrene, acrylonitrile and butadiene. The ABS polymer used in Example IX was also a Marbon product, designated as Marbon PC/ABS HHI. This product contains as monomer components alpha-methyl styrene, acrylonitrile and butadiene with minor amounts of a polycarbonate resin. The ABS polymer used in Example X was the same as Example VII. Examples XII and XIII are control examples conducted using 100 percent vinyl chloride-polyolefin graft polymer in Example XII and 100 percent ABS polymer in Example XIII.

TABLE III

| EXAMPLE NO. | PARTS VINYL HALIDE GRAFT POLYOLEFIN POLYMER | PARTS ABS POLYMER | NOTCHED IZOD IMPACT STRENGTH ft.-lb./in. | | 264 psi HDT $C^O$ | | TENSILE STRENGTH psi | TENSILE MODULUS x $10^5$ psi | FLEXURAL STRENGTH psi | FLEXURAL MODULUS x $10^5$ psi |
|---|---|---|---|---|---|---|---|---|---|---|
| | | | Room T | -20$^O$F. | As Molded | Annealed | | | | |
| VII | 50 | 50 | 14 | 1.6 | 72 | 83 | 6,800 | 3.56 | 13,000 | 3.86 |
| VIII | 50 | 50 | 16.2 | 1.6 | 74 | 83 | 6,600 | 3.45 | 12,000 | 3.75 |
| IX | 50 | 50 | 14.0 | 1.2 | 70 | -- | 6,600 | 3.91 | 12,000 | 3.71 |
| X | 25 | 75 | 4.3 | 1.0 | 81 | 87 | 7,500 | 3.68 | 14,000 | 4.03 |
| XI | 25 | 75 | 9.2 | 1.6 | 84 | 89 | 7,000 | 3.61 | 13,000 | 4.00 |
| XII* | 100 | -- | 19.6 | 0.9 | 60 | 74 | 6,000 | 3.64 | 11,000 | 3.80 |
| XIII* | -- | 100 | 5.0 | 1.1 | 89 | 95 | 7,600 | 4.20 | 14,000 | 4.20 |

*Control Examples

CLAIMS

1.      A moldable thermoplastic polymer composition comprising a blend of polymers, characterised by comprising a blend of a graft copolymer of a vinyl halide and optionally a comonomer copolymerisable therewith on a polyolefin component and a polymer composition consisting essentially of acrylonitrile, 1,3-butadiene and styrene monomer units (ABS polymer).

2.      A composition according to claim 1 wherein the blend contains at least 50 weight percent of either the graft copolymer or the ABS polymer and a minor weight proportion of the other, said proportions being based on the weight of the blend.

3.      A composition according to claim 2 wherein the proportion of the graft copolymer is from 50 to 99 percent by weight and said graft copolymer has been prepared by bulk liquid phase polymerization.

4.      A composition according to claim 3 wherein the graft copolymer is present in a proportion of from 60 to 95 percent by weight.

5.      A composition according to claim 2 wherein the proportion of ABS polymer is from 50 to 95 percent by weight and said graft copolymer has been prepared by bulk liquid phase polymerization.

6.      A composition according to claim 5 wherein the proportion of ABS polymer is from 50 to 80 percent by weight.

7.      A composition according to any one of the preceding claims wherein the polyolefin component of the graft copolymer has a weight average molecular weight of between 50,000 and 1,000,000, and is selected from:

        a)  a homopolymer of an aliphatic hydrocarbon olefin monomer of 2 to 8 carbon atoms.

        b)  a copolymer of two or more of said olefin monomers, and

        c)  a polymer of at least one of said olefin monomers and no more than 15 percent by weight, based on the weight of the polymer, of a non-conjugated aliphatic hydrocarbon polyene of 4 to 18 carbon atoms.

8. A composition according to claim 7 wherein said polyolefin component is selected from an ethylene-propylene copolymer, an ethylene-propylene-diene-modified terpolymer, a propylene homopolymer and a butene-1 ethylene copolymer.

9. A composition according to claim 8 wherein said polyolefin component is an ethylene-propylene ethylidene norbornene terpolymer.

10. Shaped articles of a composition as claimed in any one of the preceding claims.